# EUROPEAN PATENT SPECIFICATION

(11) **EP 1 693 636 B1**
(45) Date of publication and mention of the grant of the patent: **11.02.2015**
(21) Application number: 04819844.4
(22) Date of filing: 01.12.2004
(51) Int. Cl.: F28D 20/02

(54) **HEAT STORAGE UNIT**
WÄRMESPEICHEREINHEIT
UNITE DE STOCKAGE THERMIQUE

(30) Priority: 02.12.2003 JP 2003402457; 12.04.2004 JP 2004116574
(43) Date of publication of application: 23.08.2006
(73) Proprietor: KABUSHIKI KAISHA KOBE SEIKO SHO, Kobe-shi, Hyogo 651-8585 (JP)
(72) Inventor: TAKAHASHI, Kazuo, Kobe Corporate Res. Lab., Kobe-shi, Hyogo 651-2271 (JP); YAGI, Hiromiki, Kobe Corporate Res. Lab., Kobe-shi, Hyogo 651-2271 (JP); HIGASHI, Yasuo, Kobe Corporate Res. Lab., Kobe-shi, Hyogo 651-2271 (JP); MIYAKE, Toshiya, Kobe Corporate Res. Lab., Kobe-shi, Hyogo 651-2271 (JP)
(74) Representative: TBK
(86) International application number: PCT/JP2004/017834
(87) International publication number: WO 2005/054767

(56) References cited:
- WO-A1-03/019099
- DE-A1- 4 443 320
- DE-A1- 19 500 105
- JP-A- 4 297 769
- JP-A- 63 271 095
- JP-A- 2000 038 577
- JP-A- 2001 004 290
- JP-A- 2003 329 382
- US-A- 2 996 894
- US-A- 4 086 958
- US-A- 4 263 961

## Description

The present invention relates to a heat storage unit according to the preamble of claim 1, 10 or 19 capable of storing generated heat and transporting the heat to a remote place.

### Background Art

Heat generated from a factory such as an ironworks and garbage-disposal facility, for example, is used in various kinds of facility near the factory. Further, by temporarily storing the heat generated from the factory in a heat storage body or the like and by transporting the heat storage body, the heat can be used in the remote place from the factory. As a device for storing heat, there exists a device that performs heat exchange by allowing a medium such as oil, to which heat is supplied, to directly contact metal hydrate and stores heat in the metal hydrate.

For example, the heat storage body such as sodium acetate and oil having a smaller specific gravity than that of the heat storage body are housed in the storage container of WO 03/019099 A1. Since the specific gravity of oil is smaller and the oil and the heat storage body do not mix, they are housed vertically in a separated manner. Then, pipes are disposed in the oil and the heat storage body, and they are severally connected to a heat exchanger. The oil is taken into the heat exchanger from one pipe to supply heat, and the oil to which heat was supplied is discharged from the other pipe into the heat storage body. Since the discharged oil has a small specific gravity, it goes up to the oil in the upper area. Heat is exchanged by the direct contact between the heat storage body and the oil while the oil goes up. By repeating the above-described action, heat is stored in the heat storage body. Then, the pipes of WO 03/019099 A1 are in a double pipe structure in order to prevent impurities from being mixed into the pipes or the heat exchanger.

The heat storage body such as sodium acetate that stores heat utilizes latent heat of fusion, where the state of the heat storage body changes from solid to liquid as heat is added, and heat is thus stored. Therefore, in WO 03/019099 A1, the heat storage body is solid at the starting point of heat supply, so that discharge holes are clogged up by solid heat storage body even when the oil to which heat was supplied is ready to be discharged from the pipe arranged inside the heat storage body, the oil cannot be discharged until heat is applied to the heat storage body to change its state to liquid, and heat cannot be supplied to the heat storage body. As a result, enormous time is spent in storing heat.

US 4 086 958 A shows a generic heat storage unit according to the preamble of independent claim 1, 10 or 19.

Another heat storage unit according to the prior art is shown in DE 44 43 320 A1.

### Disclosure of the Invention

It is an object of the present invention to further develop a generic heat storage unit according to the preamble of independent claim 1, 10 or 19 such that agitation on a boundary surface between a heat exchange medium and a heat storage body in said heat storage unit is suitably prevented.

The object of the present invention is achieved by a heat storage unit having the features of independent claim 1, 10 or 19.

Further advantageous developments of the present invention are defined in the dependent claims.

With the constitution according to the present invention as defined in claim 1, the heat exchange medium can be discharged from the supply pipe regardless of the state of the heat storage body because the discharge holes are provided in the heat exchange medium side. The heat storage body is solid under normal state and changes to liquid as heat is stored. For this reason, the discharge holes are clogged up by the solid heat storage body at the starting point of heat supply even if the discharge holes are provided for the supply pipe arranged in the heat storage body. Then, the supplied heat exchange medium can be discharged by providing the discharge holes on the heat exchange medium side, and heat can be conducted to the heat storage body. Then, once the heat storage body changes from solid to liquid, the heat exchange medium can be discharged from the discharge holes provided on the heat storage body side as well. This makes it possible to contact the heat storage body and the heat exchange medium in a short time, so that a heat storage time can be shortened. Further, when the discharge holes are not provided in the heat exchange medium, there is a possibility that the discharge holes provided on the heat storage body side are clogged up, the heat exchange medium passing through the supply pipe is not discharged and heat cannot be stored, but such danger can be eliminated.

It is preferable that the supply pipe of the present invention cross vertically with respect to the boundary surface. With this, the heat exchange medium can be discharged along the supply pipe by allowing the supply pipe to cross vertically the boundary surface, and heat can be stored in the heat storage body near the supply pipe first. Thus, heat exchange from the heat exchange medium to the heat storage body: can be performed efficiently.

In this case, it is preferable that the supply pipe be disposed coaxially around the circumference of an area having the discharge holes and have a circulation pipe to allow the heat exchange medium discharged from the discharge holes to go up in the vertical direction. With this constitution, by allowing the supplied heat exchange medium to be discharged in the vertical direction along the circulation pipe, circulating flow associated with temperature change occurs around the circulation pipe. With this, heat can be conducted efficiently to the heat storage body and a heat storage time can be shortened.

With the constitution according to the present invention as defined in claim 10, heat storage time can be shortened by using first and second flow pipes. The heat storage body can store heat by changing its state from solid to liquid. Therefore, since the heat storage body is solid at the starting point of heat storage, the discharge holes provided for the first supply pipe are clogged up and they cannot discharge the supplied heat exchange medium. On the other hand, since the second supply pipe has an outlet in the heat exchange medium, it can constantly discharge the supplied heat exchange medium. For this reason, heat can be conducted by indirect contact of the heat exchange medium flowing in the second supply pipe to change the heat storage body from solid to liquid. Then, by changing the heat storage body to liquid, the heat exchange medium can be discharged from the discharge holes of the first supply pipe. By switching the two supply pipes to store heat in the heat storage body in this manner, heat storage time can be shortened.

It is preferable for the present invention that, in the heat storage body, the second supply pipe surround at least a part of the first supply pipe including the discharge holes and have a communicating portion that guides the discharge holes to the heat exchange medium. With this, when the second supply pipe is surrounded by the first supply pipe, the periphery of the second supply pipe and the periphery of the discharge holes for heat exchange medium of the first supply pipe can be heated by the heat exchange medium flowing in the second supply pipe. By quickly heating these areas to melt the solid heat storage body, the heat exchange medium is quickly discharged from the first supply pipe to allow the heat storage body to directly contact the heat exchange medium, and the heat storage time can be shortened.

It is preferable for the present invention that a switching valve for : switching supply and cutoff of the heat exchange medium depending on the state of the heat storage body be provided severally for the first and second supply pipes. With this constitution, timing for switching the supply pipes can be changed depending on the state of the heat storage body, and heat can be stored more efficiently For example, the pipes can be switched such that the heat exchange medium is supplied to both of the first supply pipe and the second supply pipe at the starting point of heat storage and then the medium is supplied only to the first supply pipe, and thus heat can be stored efficiently.

In the case where the supply pipe or at least a part of the first supply pipe extends in the horizontal direction, the present invention may be provided with the discharge holes for an area extending in the horizontal direction such that the holes are open in the vertically downward direction. With this, the specific gravity of the heat exchange medium is smaller than that of the heat storage body, so that a danger that the heat storage body enters inside the supply pipe from the discharge holes is eliminated when the discharge holes are open downward.

It is preferable for the present invention that, in the heat storage body, the supply pipe or the first supply pipe have an expanded portion that is in a shape that widens toward the end and provided with the discharge holes on the bottom surface. With this constitution, the specific gravity of the heat exchange medium is smaller than that of the heat storage body, so that a danger that the heat storage body enters inside the supply pipe from the discharge holes is eliminated because the discharge holes are open downward. Furthermore, more heat exchange medium can be discharged by forming the pipe in the shape that widens toward the end, and the heat storage time can be shortened.

With the constitution according to the present invention as defined in claim 19, the heat exchange medium can constantly flow in the first supply pipe regardless of the state of heat storage body, so that heat can be conducted to the heat exchange medium in the second supply pipe and high temperature can be maintained. Thus, high temperature can be discharged from the discharge holes, so that heat can be sufficiently stored.

It is preferable that the present invention, in the case where the supply pipes are provided parallelly in the heat storage body, be provided with a thermal conduction member for conducting heat of the supply pipes to the heat storage body between the supply pipes. With this, heat can be supplied to the heat storage body in a shorter time, and the heat storage time can be shortened.

It is preferable that at least a part of the supply pipe of the present invention be provided on the bottom surface of the storage container. With this constitution, the heat exchange medium to be discharged goes up because its specific gravity is lighter than the heat storage body, and a contact time between the discharged heat exchange medium and the heat storage body can be made longer by providing the supply pipe on the bottom surface. Further, in the present invention, it is preferable that the second supply pipe be provided on the bottom surface of the storage container so as to cover the bottom surface. With this, a contact surface between the second supply pipe and the heat storage body is wide and heat can be stored from the bottom portion of the heat storage body, so that the heat storage time can be shortened.

It is preferable that the connection port of the supply pipe of the present invention be positioned above the connection port of the discharge pipe. With this constitution, by allowing the connection port of the supply pipe to be positioned higher than the connection port of the discharge pipe, the heat exchange medium from the discharge pipe can be inversely flown first when the heat storage body or the heat exchange medium flows inversely, and it is possible to avoid a danger that the heat storage body to which heat is stored flows inversely.

According to the present invention as defined in claims 1, 10 and 19, wave-absorbing plates are provided that are parallelly arranged with each other along the boundary surface between the heat storage body and the heat exchange medium, arranged vertically with respect to the boundary surface, and prevent agitation on the boundary surface. With this constitution, it is possible to prevent agitation on the boundary surface caused by vibration associated with transportation in the heat storage state.

It is preferable that the discharge pipe of the present invention include a separation mechanism that separates the heat storage body and the heat exchange medium. With this constitution, the heat storage body can be removed if it is mixed in the heat exchange medium to be discharged outside the storage container. In this case, it is preferable that the separation mechanism have a separator for allowing the heat exchange medium and the heat storage body, which were taken in, to flow horizontally in one direction and a discharge hole that discharges the heat storage body, which is being precipitated, from the separator, and the separator have a shape for guiding the precipitated heat storage body toward the discharge hole. With this, the heat storage body and the heat exchange medium can be separated with a simple structure.

Furthermore, it is preferable that the heat storage body of the present invention be erythritol. With this, it is possible to store heat efficiently in a short time.

### Best Mode for Implementing the Invention

In the following, description will be made for the preferred embodiments of the present invention with reference to the drawings.

### (First embodiment)

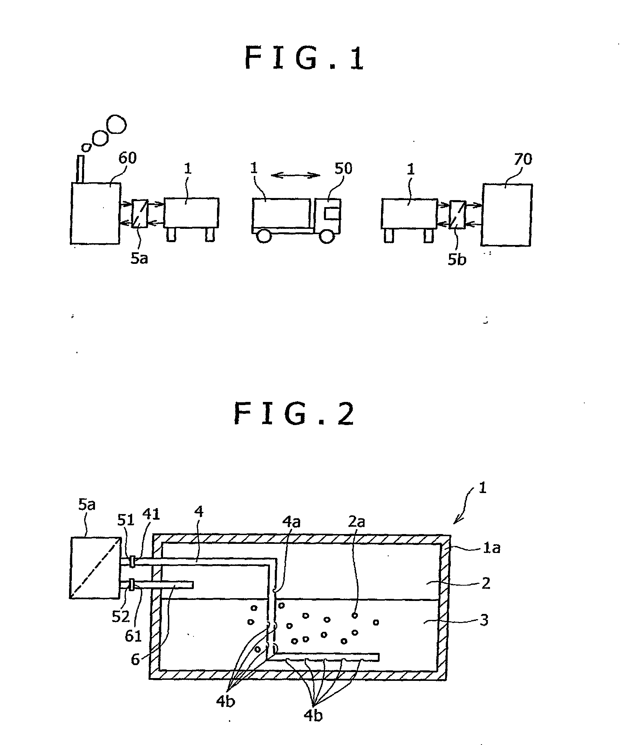

A heat storage unit 1 according to the first embodiment of the present invention is preferably used in a portable heat storage unit. For example, as shown in Fig. 1, it is applied for a heat transportation system that transports heat when a factory 60 generating heat and facility 70 using the heat are remote from each other. The heat storage unit 1 is detachable to connection ports 51, 52 of heat exchangers 5a, 5b that store heat or discharge heat to/from the heat storage unit 1, and is transported between the factory 60 and the facility 70 by a vehicle 50 such as a truck. The factory 60 is a garbage-incinerating facility, a power generating plant, an ironworks or the like, and heat generated in the factory is stored in the heat storage unit 1 via the heat exchanger 5a. Further, the facility 70 is facility such as a heated swimming pool and a hospital, and the heat stored in the heat storage unit 1 is applied for temperature-control system or the like in the facility via the heat exchanger 5b. In the following description, heat exchange in the factory 60 side will be explained.

The heat storage unit 1 includes a heat storage container 1a (storage container) that houses oil 2 (heat exchange medium) and sodium acetate trihydrate salt 3 (heat storage body) (hereinafter, referred to as sodium acetate 3), a supply pipe 4, and a discharge pipe 6. Since the oil 2 and the sodium acetate 3 are not mixed with each other and the oil 2 has a smaller specific gravity than that of the sodium acetate 3, the oil 2 and the sodium acetate 3 are housed in the heat storage container 1a severally in an upper layer and a lower layer in a separate manner. Furthermore, since the oil 2 and the sodium acetate 3 are not mixed, that is, the oil 2 and the sodium acetate 3 are separate from each other, a member or the like for separating the oil 2 from the sodium acetate 3 is not laid between them and the oil 2 is in directly contact with the sodium acetate 3.

The oil 2 performs heat exchange with the sodium acetate 3 by direct contact with the sodium acetate 3. The oil 2, when it is taken into the heat exchanger 5a from the discharge pipe 6 (described later) and heat is supplied in the heat exchanger 5a (in the description below, the oil 2 to which heat was supplied in the heat exchanger 5a will be called oil 2a), it is discharged into the sodium acetate 3 via the supply pipe 4. Since the discharged oil 2a has a smaller specific gravity than that of the sodium acetate 3, it goes up to the oil 2 of the upper layer and is taken in by the oil 2. During the upward movement, the heat supplied to the oil 2a is conducted to the sodium acetate 3 due to the direct contact with the sodium acetate 3.

The sodium acetate 3 stores the heat conducted from the above-described oil 2a. The melting point of the sodium acetate 3 is about 58°C and it is solid under the normal state (room temperature). Then, its state changes from solid to liquid when the heat is conducted from the oil 2a due to the direct contact, and heat is stored during a liquid state.

The supply pipe 4 is provided in the upper layer portion of the heat storage container 1a, where the housed oil 2 is positioned, in a penetrated manner, and a connection port 41 is detachably connected to the connection port 51 of the heat exchanger 5a. The supply pipe 4 that is provided for the heat storage container 1a in a penetrated manner vertically crosses the boundary surface between the oil 2 and the sodium acetate 3 and enters the sodium acetate 3, and furthermore, it is bent in an L-shape and horizontally extended. The supply pipe 4 has an internal space and the oil 2a to which heat was supplied by the heat exchanger 5a flows in the internal space.

Further, the supply pipe 4 has a plurality of discharge holes 4a, 4b, which discharge the oil 2a flowing inside the pipe, along its axis direction. A plurality of discharge holes 4a are provided above a boundary surface while using the boundary surface between the oil 2 and the sodium acetate 3 as a boundary, that is, on the supply pipe 4 of the oil 2 side. Furthermore, one or more discharge holes 4b are provided below the boundary surface, that is, on the supply pipe 4 of the sodium acetate 3 side. Note that the discharge holes 4b provided in an area where the supply pipe 4 is bent in an L-shape and horizontally extended, are provided so as to be open vertically downward. Thus, since the sodium acetate 3 has a larger specific gravity than that of the oil 2a, the sodium acetate 3 does not enter the supply pipe 4 while pushing aside the oil 2a to be discharged from the discharge holes 4b, and this prevents the sodium acetate 3 from being solidified and clogged inside the supply pipe 4.

The discharge pipe 6 is provided in the upper layer portion of the heat storage container 1a, where the housed oil 2 is positioned, in a penetrated manner. Then, a connection port 61 of the discharge pipe 6 is detachably connected to the connection port 52 of the heat exchanger 5a to take the oil 2 inside the heat storage container 1a into the heat exchanger 5a. At this point, the connection port 61 of the discharge pipe 6 is disposed on the heat storage container 1a so as to be below the connection port 41 of the supply pipe 4, that is, such that the discharge pipe 6 is below the supply pipe 4. If the supply pipe 4 and the discharge pipe 6 are removed from the heat exchanger 5a in a wrong procedure, there is a possibility that the oil 2 or the sodium acetate 3 flows inversely due to a pressure difference between the outside and the inside of the heat storage container 1a. For this reason, the discharge pipe 6 is arranged below the supply pipe 4 to allow the oil 2 to which heat is not applied to flow inversely first from the discharge pipe 6. Consequently, a pressure difference from the outside is eliminated and a danger that the sodium acetate 3 to which heat is stored flows inversely from the supply pipe 4 is prevented.

The heat exchanger 5a stores heat generated from the factory 60 in the heat storage container 1a. As described above, the supply pipe 4 and the discharge pipe 6 are connected detachably to the heat exchanger 5a. Then, the supply pipe 4 and the discharge pipe 6 are communicated with each other in the heat exchanger 5a. Moreover, a pipe (not shown) that takes in the heat generated from the factory 60 as steam and a pipe (also not shown) that discharges steam from which heat has been removed are connected to the heat exchanger 5a, and the pipes are communicated with each other in the heat exchanger 5a via a pipe arranged so as to surround the communicated portion between the supply pipe 4 and the discharge pipe 6. Further, a pump (not shown) is disposed for the connection port 51 of the heat exchanger 5a, and it takes the oil 2 into the heat exchanger 5a and sends the oil 2 that was taken in to the heat storage container 1a.

The heat exchanger 5a takes in the oil 2 inside heat storage container 1a by the pump via the discharge pipe 6 while it takes in steam generated from the factory 60 via the pipe. The steam that was taken in conducts heat to the oil 2, which was taken in, by indirect contact of the pipes in the communicated portion between the supply pipe 4 and the discharge pipe 6. After that, the oil 2a to which heat was supplied is supplied into the heat storage container 1a via the supply pipe 4. In addition, the steam from which heat was removed is discharged via the pipe. When the heat exchanger 5a repeats the above-described action, the heat generated from the factory 60 can be stored in the sodium acetate 3 of the heat storage unit 1.

Next, description will be made for the heat storage method to the heat storage unit 1.

The steam generated from the factory 60 is taken into the heat exchanger 5a. On the other hand, the oil 2 inside the heat storage container 1a is taken into the heat exchanger 5a via the discharge pipe 6. Then, in the heat exchanger 5a, heat of the steam is conducted to the oil 2 that was taken in. The oil 2a to which heat was supplied is returned to the heat storage container 1a via the supply pipe 4.

The oil 2a flows in the supply pipe 4 and is discharged from the discharge holes 4a, 4b. Since the sodium acetate 3 at the starting point of heat storage is solid and the discharge holes 4b are provided in the sodium acetate 3 side, the discharge holes 4b is in the state of being clogged by the solid sodium acetate 3. For this reason, the oil 2a is not discharged from the discharge holes 4b.

On the other hand, since the discharge holes 4a are provided in the oil 2 side, the oil 2a can be discharged without clogging the discharge holes 4a. Then, the oil 2a discharged from the discharge holes 4a conducts heat to the sodium acetate 3 near the boundary surface between the oil 2 and the sodium acetate 3. With this, the state of the sodium acetate 3 gradually changes from solid to liquid from the upper portion thereof, and the oil 2a is discharged from the discharge holes 4b as well. Due to the direct contact with the discharged oil 2a, heat is stored in the sodium acetate 3. Furthermore, the oil 2a flowing in the supply pipe 4 conducts heat to the sodium acetate 3 via the supply pipe 4 due to the indirect contact. This makes it possible to change the sodium acetate 3 from solid to liquid even faster and the heat storage time can be shortened.

When the sodium acetate 3 becomes a liquid state and the oil 2a is discharged into the sodium acetate 3, it goes up to the oil 2 in the upper layer and is taken into the layer because the specific gravity of the oil 2a is smaller than that of the sodium acetate 3. The oil 2a conducts heat to the sodium acetate 3 as it goes up. By repeating the above-described action, heat can be stored in the sodium acetate 3.

Meanwhile, description has been made for the heat exchange in the factory 60 side, but the same applies to the heat exchange in the facility 70 side. Specifically, the sodium acetate 3 is liquid in the state where heat was supplied, and stored heat can be taken out from the liquid. The supply pipe 4 and the discharge pipe 6 of the heat storage unit 1 are connected detachably to the heat exchanger 5b that takes out the heat stored in the heat storage unit 1, and furthermore, a pipe for taking in gas or liquid and a pipe for supplying to heated gas or liquid and for supplying to the temperature-control system of the facility 70 are connected to the heat exchanger 5b.

The heat exchanger 5b discharges the oil 2 into the sodium acetate 3 in which heat is stored via the supply pipe 4. Heat is conducted from the sodium acetate 3 to the discharged oil 2 due to the direct contact as it goes up. With this, heat is supplied to the oil 2 in the upper layer and the oil is taken into the heat exchanger 5b from the discharge pipe 6. On the other hand, gas or liquid such as water is taken into the heat exchanger 5b. Then, heat is conducted from the oil 2 to which heat was applied to gas or liquid. The gas or liquid to which heat was conducted passes through the pipe and is supplied to the temperature-control system in the facility 70. By repeating the above-described action, heat stored in the sodium acetate 3 can be taken out.

Next, description will be made for a heat transportation system using the heat storage unit 1 according to the first embodiment. By repeating the above-described action, the heat generated from the factory 60 due to garbage incineration or the like is stored in the heat storage unit 1. Since the heat storage unit 1 is connected to the heat exchanger 5a detachably, it is removed after heat storage is completed, and transported to the facility 70 requiring the stored heat by the vehicle 50 such as a truck. The transported heat storage unit 1 is connected to the heat exchanger 5b, the heat stored in the heat storage unit 1 is taken out, and used in the temperature-control system or the like of the facility 70.

As described above, because the discharge holes 4a are provided in the oil 2 side of the supply pipe 4 in this embodiment, even if the sodium acetate 3 is solid at the starting point of heat storage, the solid sodium acetate 3 can be changed to liquid in a shorter time by discharging the oil 2a from the discharge holes 4a. With this, the heat storage time to the sodium acetate 3 can be shortened.

Furthermore, by allowing the supply pipe 4 to vertically cross the boundary surface between the oil 2 and the sodium acetate 3, the sodium acetate 3 near the supply pipe 4 can be changed from solid to a liquid state by the oil 2a discharged from the discharge holes 4a, and thus the oil 2a can be discharged faster from the discharge holes 4b. Consequently, the heat storage time can be even shorter.

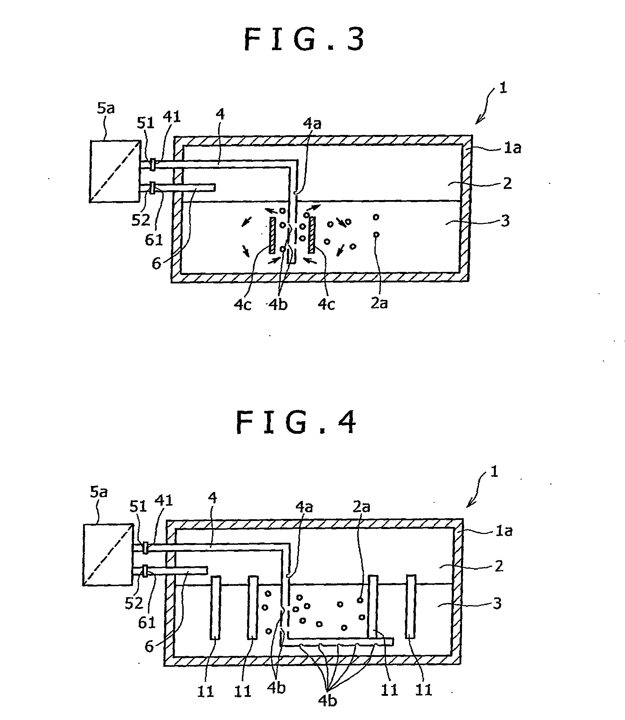

Meanwhile, as a modified example of this embodiment, a circulation pipe 4c may be provided as shown in Fig. 3. The circulation pipe 4c is provided so as to surround the circumference of the supply pipe 4 that vertically crosses boundary surface between the oil 2 and the sodium acetate 3, and serves as a guide for allowing the oil 2a, which is discharged from the discharge holes 4b, to go up in the vertical direction after the state of the sodium acetate 3 is changed to liquid. When the oil 2a to which heat was supplied, which is discharged from the discharge holes 4b, goes up along the circulation pipe 4c, the liquid sodium acetate 3 having low temperature moves toward the bottom portion of the circulation pipe 4c, and circulating flow is generated around the circulation pipe 4c as shown by the arrows in the drawing. This allows heat to circulate, and an effect is exerted that the heat storage time is shortened by efficiently storing heat in the sodium acetate 3.

According to the invention, a plurality of plates 11 (wave-absorbing plates) are provided so as to vertically cross the boundary surface between the oil 2 and the sodium acetate 3 as shown in Fig. 4. By providing the plates 11, the oil 2 and the sodium acetate 3 vibrate during the transportation of the heat storage unit 1 to generate waves, and agitation on the boundary surface can be prevented. By preventing agitation, heat stored in the sodium acetate 3 can be held.

Furthermore, as another modified example, a separation device 12 may be provided halfway the discharge pipe 6. The separating device 12 is a device that separates the oil 2 and the sodium acetate 3 when the sodium acetate 3 is mixed in the oil 2 that was taken in. For example, although not shown, the separation device 12 has a structure where it takes out the oil 2, which was taken in, from the upper portion of the separation device 12 while it spirally rotates the oil 2 that was taken in. In this case, since the sodium acetate 3 has a larger specific gravity than that of the oil 2, the sodium acetate 3 is discharged from an outlet at the bottom portion of the separation device 12 along the sidewall surface of the separation device 12 when it hits the sidewall surface due to centrifugal force, and only the oil 2 is taken into the heat exchanger 5a. With this, the sodium acetate 3 can be removed from the oil 2 to be taken into the heat exchanger 5a, and a danger of a failure or the like that is caused when the sodium acetate 3 enters the heat exchanger 5a is eliminated. The above-described modified examples can be applied for embodiments described below.

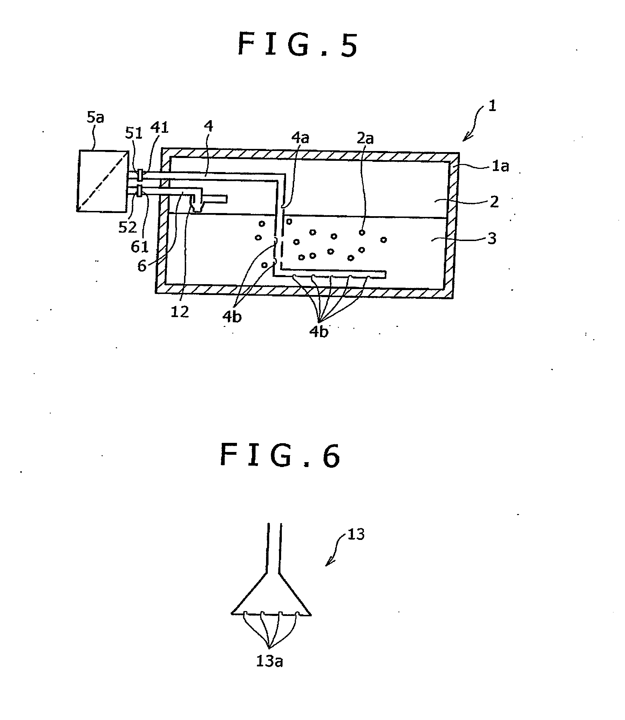

Meanwhile, the supply pipe 4 vertically crosses the boundary surface between the oil 2 and the sodium acetate 3 in this embodiment described above, but it may cross the boundary surface diagonally instead of vertically. Further, the supply pipe 4 is bent in the L-shape and extended in the horizontal direction, but it may not be extended in the horizontal direction. The pipe may be any shape as long as it can discharge the oil 2 in the sodium acetate 3. Moreover, the side surface may be a shape that widens toward the end as shown in Fig. 6, or a supply portion 13 (expanded portion) having the shape that widens toward the end may be provided halfway the supply pipe 4. In this case, it may be a conical shape or may be hemispherical shape. Further, in this case, by providing discharge holes 13a at the bottom surface portion, a danger that the sodium acetate 3 enters inside the pipe is eliminated.

Furthermore, in this embodiment, the discharge holes 4b, which are provided in the horizontally extended portion of the supply pipe 4 in the sodium acetate 3, are provided on the lower portion of the supply pipe 4, but they may be provided on the upper portion thereof. In addition, in this embodiment, sodium acetate is used as a substance for storing heat and oil is used as a substance for conducting heat, but the substances are not limited to them. For example, the heat storage body may be erythritol. Since erythritol can be heated by oil having the temperature of 120°C or higher, it exerts an effect that heat can be stored efficiently in a short time.

### (Second embodiment)

Next, description will be made for the heat storage unit according to the second embodiment of the present invention. The heat storage unit according to this embodiment is different from the first embodiment on the point that it is provided with two supply pipes. In the following, only the different point will be described. Note that the same reference numerals are applied to the same members as those of the first embodiment, and their explanation will be omitted.

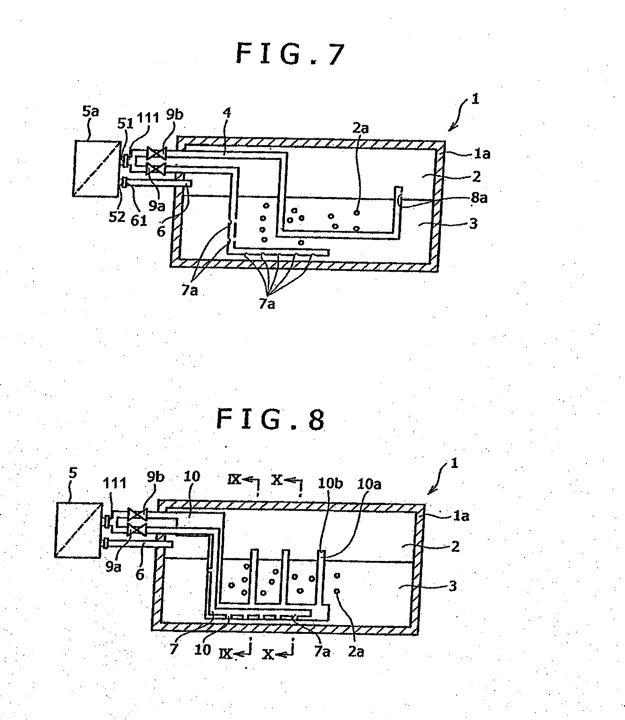

As shown in Fig. 7, the heat storage unit 1 according to this embodiment is provided with a first supply pipe 7 (first supply pipe) and a second supply pipe 8 (second supply pipe). The first supply pipe 7 and the second supply pipe 8 are provided in the upper layer portion of the heat storage container 1a, where the housed oil 2 is positioned, in a penetrated manner, and is detachably connected to the heat exchanger 5a. Specifically, the connection port of one supply pipe 11 is detachably connected to the connection port 51 of the heat exchanger 5a, and the supply pipe 111 branches into the first supply pipe 7 and the second supply pipe 8. The first supply pipe 7 and the second supply pipe 8, which are provided for the heat storage container 1a in a penetrated manner, vertically cross the boundary surface between the oil 2 and the sodium acetate 3 and go into the sodium acetate 3, and furthermore, is bent in the L-shape and extended horizontally. Moreover, the second supply pipe 8 vertically crosses the boundary surface between the oil 2 and the sodium acetate 3 from the end portion of the horizontally extended portion. The first supply pipe 7 and the second supply pipe 8 have an internal space, and the oil 2a to which heat was supplied by the heat exchanger 5a flows in the internal space.

The first supply pipe 7 has a plurality of discharge holes 7a that discharge the supplied oil 2a into the sodium acetate 3 along the axis direction thereof. Further, the second supply pipe 8 has outlets 8a that discharge the supplied oil 2a into the oil 2. The outlets 8a are provided on the terminal portion of the second supply pipe 8, the oil 2a supplied from the heat exchanger 5a flows in the second supply pipe 8, and is discharged into the oil 2 from the outlets 7a. The discharge holes 4b provided on the portion of the first supply pipe 7, which is extended in the horizontal direction, are provided in the vertically downward direction. Note that the first supply pipe 7 may have discharge holes on the oil 2 side similar to the first embodiment.

As described above, the subbly pipe 111 is detachably connected to the heat exchanger 5a, and is separated into the first supply pipe 7 and the second supply pipe 8. Then, valves 9a, 9b (switching valves) are disposed severally on the first supply pipe 7 and the second supply pipe 8. By opening/closing the valves 9a, 9b, supply and cutoff of the oil 2a to the first supply pipe 7 and the second supply pipe 8 can be switched.

The valves 9a, 9b open/close depending on the state of the sodium acetate 3. Specifically, when the sodium acetate 3 is solid, the valve 9b is closed to prevent the oil 2a from being supplied to the second supply pipe 8 in order to supply the oil 2a only to the first supply pipe 7. Further, when the sodium acetate 3 is liquid, the valve 9a is closed and the valve 9b is opened to allow the oil 2a to be supplied only to the second supply pipe 8. The valves 9a, 9b may be manually opened/closed by an operator, or a controller may be connected to automatically open/close the valves. Note that description of the other members will be omitted because they are the same as the first embodiment.

Next, description will be made for the heat storage method to the heat storage unit 1.

Steam passes through the pipe from the factory 60 and is taken into the heat exchanger 5a. On the other hand, the oil 2 in the heat storage container 1a is taken into the heat exchanger 5a via the discharge pipe 6. Then, in the heat exchanger 5a, heat of the steam is supplied to the oil 2 by thermal conduction. At the starting point of heat storage, only the valve 9b is opened to allow the oil 2a to be supplied only to the second supply pipe 8, and the oil 2a to which heat was supplied flows in the second supply pipe 8. The oil 2a flows in the second supply pipe 8 and is discharged from the outlets 8a into the oil 2. The oil 2a flowing through the second supply pipe 8 conducts heat to the sodium acetate 3 due to indirect contact via the second supply pipe 8, and thus the solid sodium acetate 3 changes into liquid.

When the sodium acetate 3 becomes approximately liquid, the valve 9b is closed and the valve 9a is opened to cutoff the second supply pipe 8, and the oil 2a is supplied to the first supply pipe 7. The oil 2a supplied to the first supply pipe 7 flows through the first supply pipe 7 and is discharged into the sodium acetate 3 from the discharge holes 7a. When the oil 2a is discharged, it goes up to the oil 2 in the upper layer and taken into the oil. Heat is conducted to the sodium acetate 3 during the upward movement due to the direct contact with the sodium acetate 3. With this, heat can be stored in the sodium acetate 3.

As described above, in this embodiment, by using two supply pipes for supplying the oil 2a to which heat was supplied, which are the first supply pipe 7 and the second supply pipe 8, and switching the pipes depending on the state of the sodium acetate 3, heat can be efficiently store in the sodium acetate 3. Since the sodium acetate 3 is solid at the starting point of heat storage, the oil 2a is not discharged from the discharge holes provided in the sodium acetate 3. For this reason, the oil 2a is supplied to the second supply pipe 8 when the sodium acetate 3 is solid to conduct heat to the sodium acetate 3 by indirect contact, the oil 2a is supplied to the first supply pipe 7 and discharged when the sodium acetate 3 becomes liquid to conduct heat to the sodium acetate 3 by direct contact, and thus heat can be efficiently stored in the sodium acetate 3.

Furthermore, there is a possibility that the first supply pipe 7 could burst because the supplied oil 2a is not discharged from the discharge holes 7a at the starting point of heat storage. For this reason, burst of the first supply pipe 7 can be prevented by switching the first supply pipe 7 and the second supply pipe 8, and the heat storage unit I can be used safely.

Meanwhile, in this embodiment, the oil 2 is supplied either one of the first supply pipe 7 and the second supply pipe 8 depending on the state of the sodium acetate 3, but the invention is not limited to this. For example, the oil 2a may be supplied to only the second supply pipe 8 at the starting point of heat storage, and after that, the oil 2a may be supplied to both of the first supply pipe 7 and the second supply pipe 8. Further, although the first supply pipe 7a does not have discharge holes in the above-described embodiment, the pipe may have the discharge holes. Furthermore, supply pipes may not have the valves 9a, 9b.

### (Third embodiment)

Next, description will be made for the heat storage unit according to the third embodiment of the present invention. The heat storage unit according to this embodiment is the same as the second embodiment on the point that it is provided with two supply pipes but is different on the point that one supply pipe surrounds the other supply pipe. In the following, only the different point will be described. Note that the same reference numerals are applied to the same members as those of the first and the second embodiments, and their explanation will be omitted.

As shown in Fig. 8, the heat storage unit 1 according to this embodiment has two pipes that are the first supply pipe 7 and a second supply pipe 10. The first supply pipe 7 and the second supply pipe 10 are provided in the upper layer portion of the heat storage container 1a in a penetrated manner, where the housed oil 2 is positioned, and is detachably connected to the heat exchanger 5a. Specifically, the connection port of one supply pipe 11 is detachably connected to the connection port 51 of the heat exchanger 5a, and the supply pipe 111 branches into the first supply pipe 7 and the second supply pipe 10. Then, the first supply pipe 7 is arranged in the heat storage container 1a so as to surround the second supply pipe 10. The first supply pipe 7 and the second supply pipe 10 vertically cross the boundary surface between the oil 2 and the sodium acetate 3 and go into the sodium acetate 3, and furthermore, are bent in the L-shape and extended horizontally. The first supply pipe 7 and the second supply pipe 10 have an internal space, and the oil 2a to which heat was supplied by the heat exchanger 5a flows in the internal space. As described above, the first supply pipe 7 is arranged in the internal space of the second supply pipe 10.

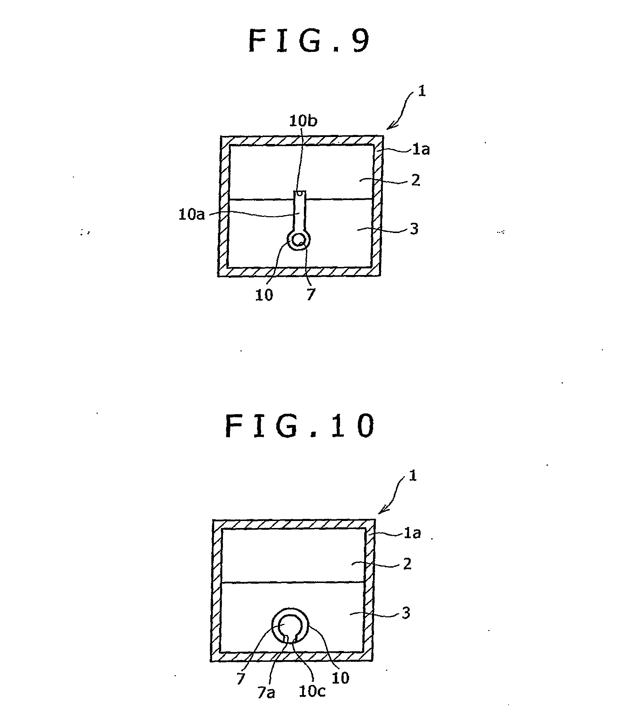

In the horizontally extended portion of the second supply pipe 10, a plurality of supply tubes 10a, which vertically cross the boundary surface between the oil 2 and the sodium acetate 3, are disposed. The supply tubes 10a have outlets 10b on the oil 2 side, and the oil 2a flowing through the second supply pipe 10 passes through the supply tubes 10a to be discharged from the outlets 10b into the oil 2, as shown in Fig. 9. Further, as shown in Fig. 10, communication portions 10c for discharging the oil 2a flowing through the first supply pipe 7 into the sodium acetate 3 are provided for the second supply pipe 10 at positions that superpose the discharge holes 7a of the first supply pipe 7 to be surrounded. Note that description of the other members will be omitted because they are the same as the first embodiment.

Next, description will be made for the heat storage method to the heat storage unit 1.

Steam passes through the pipe from the factory 60 and is taken into the heat exchanger 5a. On the other hand, the oil 2 in the heat storage container 1a is taken into the heat exchanger 5a via the discharge pipe 6. Then, in the heat exchanger 5a, heat of the steam is supplied to the oil 2 that was taken in. At the starting point of heat storage, only the valve 9b is opened to allow the oil 2a to be supplied only to the second supply pipe 10. Therefore, the oil 2a to which heat was supplied flows through the second supply pipe 10, passes through the supply tubes 10a, and is discharged from the outlets 10b into the oil 2.

When the oil 2a to which heat was supplied flows through the second supply pipe 10 and the supply tubes 10a, the oil 2a conducts heat to the sodium acetate 3 by indirect contact via the second supply pipe 10 and the supply tubes 10a. With this, the sodium acetate 3 gradually changes from solid to liquid. When the sodium acetate 3 becomes liquid, the valve 9b is closed and the valve 9a is opened. This allows the oil 2a to be supplied to the first supply pipe 7. Once the sodium acetate 3 becomes liquid, the discharge holes 7a and the communication portions 10c are not clogged and the oil 2a can be discharged from the discharge holes 7a and the communication portions 10c. Further, when the oil 2a flows through the first supply pipe 7, heat is conducted from the oil 2a flowing through the surrounding second supply pipe 10. This further increases the temperature and time to store heat in the sodium acetate 3 can be further shortened.

As described above, in this embodiment, in addition to the effect of the second embodiment, additional heat is supplied from the second supply pipe 10 to the oil 2b flowing through the first supply pipe 7 because the first supply pipe 7 is surrounded by the second supply pipe 10, and heat can be stored even faster by discharging the oil 2a into the sodium acetate 3. Moreover, areas of the first supply pipe 7 and the second supply pipe 10 arranged in the sodium acetate 3 can be made smaller.

Meanwhile, in this embodiment, the second supply pipe 10 surrounds approximately the entire first supply pipe 7 in the sodium acetate 3, but it may surround only a part of the first supply pipe 7. Further, similar to the second embodiment, the oil 2a may be supplied to both of the first supply pipe 7 and the second supply pipe 10 after the sodium acetate 3 changes to liquid. In addition, the pipes may not have the valves 9a, 9b.

### (Fourth embodiment)

Next, description will be made for the heat storage unit according to the fourth embodiment of the present invention. The heat storage unit according to this embodiment is the same as the third embodiment on the point that it is provided with two supply pipes and one supply pipe surrounds the other supply pipe but structure of each supply pipe is different. In the following, only the different point will be described. Note that the same reference numerals are applied to the same members as those of the first to the third embodiments, and their explanation will be omitted.

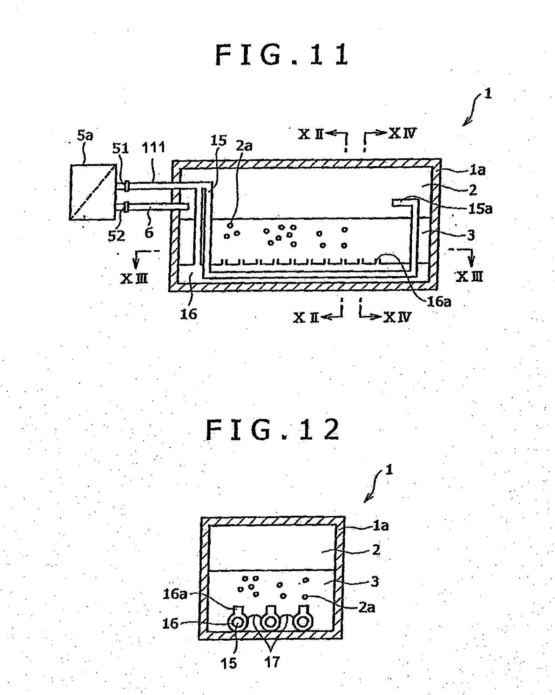

As shown in Fig. 11, the heat storage unit 1 according to this embodiment has two pipes that are a first supply pipe 15 and a second supply pipe 16. The first supply pipe 15 and the second supply pipe 16 are provided in the upper layer portion of the heat storage container 1a in a penetrated manner, where the housed oil 2 is positioned, and is detachably connected to the heat exchanger 5a. Specifically, the connection port of one supply pipe 111 is detachably connected to the connection port 51 of the heat exchanger 5a, and the supply pipe 11 branches into the first supply pipe 15 and the second supply pipe 16.

The first supply pipe 15 and the second supply pipe 16 vertically cross the boundary surface between the oil 2 and the sodium acetate 3 and go into the sodium acetate 3, and furthermore, are bent in the L-shape and extended horizontally. The first supply pipe 15 is further bent in the L-shape, vertically crosses the boundary surface again, and an outlet 15a for discharging the oil 2a is provided on the tip of the area bent in the L-shape. The first supply pipe 15 and the second supply pipe 16 have an internal space, and the oil 2a to which heat was supplied by the heat exchanger 5a flows in the internal space. In a portion where supply pipes 15, 16 are horizontally extended, a second supply tube 16 surrounds the first supply pipe 15.

The portion where the supply pipes 15, 16 are horizontally extended is arranged on the bottom surface of the heat storage container 1a. With this, contact time of the oil 2a discharged from discharge holes 16a and the sodium acetate 3 can be made longer, and heat of the oil 2a can be sufficiently conducted to the sodium acetate 3. Further, as the sodium acetate 3 changes to liquid, the oil 2a has a smaller specific gravity than that of the sodium acetate 3 and goes up once it is discharged from the discharge holes 16a, so that it becomes difficult to conduct heat to the sodium acetate 3 near the bottom surface of the heat storage container 1a and a long time is necessary in storing heat. However, by providing the first supply pipes 15, 16 on the bottom surface, heat can be sufficiently stored in the sodium acetate 3 near the bottom surface, and the heat storage time can be shortened.

Further, the discharge holes 16a for discharging the oil 2a into the sodium acetate 3 are provided on the second supply pipe 16 in the opposite direction to the bottom surface side of the heat storage container 1a. With this, the oil 2a supplied to the supply pipe 111 passes through the first supply pipe 15 and is discharged from the outlet 15a into the oil 2, and on the other hand, passes through the second supply pipe 16 and is discharged from the discharge holes 16a into the sodium acetate 3.

Next, description will be made for the heat storage method to the heat storage unit 1.

Steam passes through the pipe from the factory 60 and is taken into the heat exchanger 5a. On the other hand, the oil 2a in the heat storage container 1a is taken into the heat exchanger 5a via the discharge pipe 6. Then, in the heat exchanger 5a, heat of the steam is supplied to the oil 2 that was taken in. After that, the oil 2a to which heat was supplied is supplied to the supply pipe 111, and flows through the first supply pipe 15 and the second supply pipe 16. The oil 2a flowing through the first supply pipe 15 is discharged from the outlet 15a into the oil 2. Further, oil 2a flowing through the second supply pipe 16 is discharged from the discharge holes 16a into the sodium acetate 3.

Since the sodium acetate 3 is solid at the starting point of heat storage, it becomes difficult for the oil 2a to be discharged from the discharge holes 16a and the outlets are clogged, and thus the oil 2a cannot flow well through the second supply pipe 16. Then, there is a danger that the temperature of oil 2a is reduced while they are clogged. On the other hand, since the outlet 15a of the first supply pipe 15 is provided in the oil 2, the oil 2a can constantly flow through the first supply pipe 15 regardless of the state of the sodium acetate 3 at the starting point of heat storage, and the high-temperature oil 2a constantly flows in the first supply pipe 15. Therefore, heat is conducted to the oil 2a in the second supply pipe 16 by contacting the first supply pipe 15 in which the high-temperature oil 2a constantly flows, and high-temperature can be maintained without reducing temperature. With this, the high-temperature oil 2a can be discharged from the discharge holes 16a to the sodium acetate 3. Furthermore, high-temperature can be also maintained in the second supply pipe 16, and heat can be conducted to the sodium acetate 3 near the second supply pipe 16 as well.

Meanwhile, in this embodiment, the supply pipes 15, 16 are arranged on the bottom surface of the heat storage container 1a, but they may not be arranged on the bottom surface. In this case, the disposing positions of the discharge holes 16a are not limited as described above. In the case where the supply pipes 15, 16 are not arranged on the bottom surface, it is preferable that the supply pipes 15, 16 be arranged near the bottom surface.

As described above, in this embodiment, since heat is conducted from the supply pipe 15 to the oil 2a discharged from the discharge holes 16a, it is possible to constantly maintain high-temperature and the heat storage time can be shortened. Further, by arranging the supply pipes on the bottom surface of the heat storage container 1a, the contact time of the discharged oil 2a and the sodium acetate 3 can be made longer. Then, although the oil 2a goes up due to light specific gravity and it becomes difficult to store heat in the sodium acetate 3 in the lower portion, heat can be stored in the entire sodium acetate 3 by arranging the supply pipes on the bottom surface.

Furthermore, as a modified example of this embodiment, the supply pipes 15, 16 may be provided parallelly in the lateral direction with the same gap as shown in Fig. 12. By providing the pipes parallelly, it becomes possible to allow the oil 2a and the supply pipes 15, 16 to directly contact the sodium acetate 3 over a wider range, and the heat storage time can be made even shorter. In this case, it is preferable that a corrugated conduction plate 17 (thermal conduction member) be provided so as to join each supply pipe 15, 16.

The conduction plate 17 has a corrugated shape where circular arcs are oppositely joined alternately, the second supply pipes 16 are fitted into the circular arc portions, they are closely adhered by welding or the like, and arranged on the bottom surface. With this, the contact area between the second supply pipe 16 and the conduction plate 17 becomes larger and heat quantity to be conducted to the conduction plate 17 becomes larger, and heat can be sufficiently conducted to the sodium acetate 3 between the supply pipes 15, 16. Consequently, the heat storage time can be made even shorter. It is preferable that the conduction plate 17 be constituted by metal having high thermal conductivity such as copper, aluminum and iron. Note that the conduction plate 17 may be a planar shape instead of the corrugated shape. In addition, the supply pipes 15, 16 may be parallelly provided in a longitudinal direction and adjacent supply pipes 15, 16 may not be arranged in the same gap.

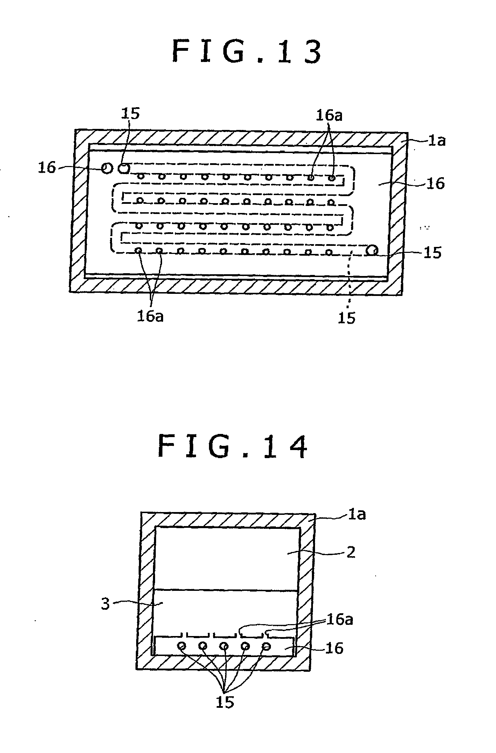

Further, as another modified example, as shown in Fig. 13 and Fig. 14, the second supply pipe 16 may cover approximately the entire bottom surface of the heat storage container 1a and the first supply pipe 15 may be extended in the second supply pipe 16 covering the bottom surface. By arranging the second supply pipe 16 so as to approximately cover the bottom surface, heat can be conducted from the entire lower portion to the sodium acetate 3, and the heat storage time can be further shortened. Moreover, since the first supply pipe 15 is designed to pass through the entire second supply pipe 16, the oil 2a in the second supply pipe 16 can be maintained at high-temperature. In this case, it is preferable that the first supply pipe 15 pass near the discharge holes 16a. This makes it possible to maintain the oil 2a to be discharged from the discharge holes 16a at as high-temperature as possible, and the heat storage time can be shortened.

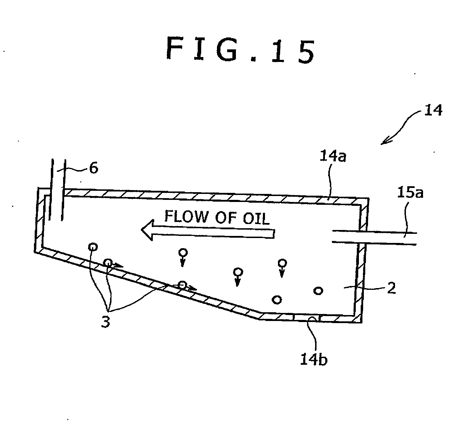

Furthermore, as another modified example, a separation device 14 (separation mechanism) as shown in Fig. 15 may be provided between the outlet 15a of the first supply pipe 15 and the discharge pipe 6. The separation device 14 is a device for separating the oil 2 and the sodium acetate 3 when the sodium acetate 3 is mixed into the oil 2 that was taken in. The separation device 14 has a main body 14a (separator) that takes in the oil 2 containing the sodium acetate 3. The oil 2 is filled in the main body 14a, the oil 2 horizontally taken into the body flows horizontally in one direction, and then is discharged. Further, the bottom surface of the main body 14a has a level surface and a tilt surface, where a hole 14b for discharging the sodium acetate 3 is provided in the level surface. Although described later, since the bottom surface has the tilt surface, the sodium acetate 3 to be precipitated is guided toward the hole 14b.

When the oil 2 contains the sodium acetate 3, the sodium acetate 3 having a larger specific gravity than that of the oil 2 precipitates while horizontally flowing in the main body 14a. The precipitated sodium acetate 3 is discharged from the hole 14b. Further, since the bottom surface of the main body 14a has the tilt surface, the sodium acetate 3 precipitated on the tilt surface also moves toward the hole 14b in a sliding manner to be discharged from the hole 14b. By providing the separation device 14 between the outlet 15a and the discharge pipe 6, the sodium acetate 3 is not contained in the oil 2a any more. In addition, even in the case where the sodium acetate 3 is contained, the sodium acetate 3 can be precipitated and removed, so that a danger of failure or the like caused when the sodium acetate 3 enters the heat exchanger 5a is eliminated. Note that the separation device 14 may be provided halfway the discharge pipe 6.

The present invention is described in the above-described preferred embodiments, but the present invention is not limited only to them. It should be understood that other various embodiments can be implemented, which fall within the scope of the present invention as defined in the appended claims.

### Brief Description of the Drawings

[Fig. 1] An entire schematic view of the heat transportation system of the present invention
[Fig. 2] A sectional view of the heat storage unit according to the first embodiment of the present invention
[Fig. 3] A modified example of the heat storage unit according to the first embodiment
[Fig. 4] Another modified example of the heat storage unit according to the first embodiment
[Fig. 5] Another modified example of the heat storage unit according to the first embodiment
[Fig. 6] Another modified example of the heat storage unit according to the first embodiment
[Fig. 7] A sectional view of the heat storage unit according to the second embodiment of the present invention
[Fig. 8] A sectional view of the heat storage unit according to the third embodiment of the present invention
[Fig. 9] A sectional view on IX-IX line of Fig. 8
[Fig. 10] A sectional view on X-X line of Fig. 8
[Fig. 11] A sectional view of the heat storage unit according to the fourth embodiment of the present invention
[Fig. 12] A modified example of the heat storage unit according to the fourth embodiment and a sectional view on XII-XII line of Fig. 11
[Fig. 13] Another modified example of the heat storage unit according to the fourth embodiment and a sectional view on XIII-XIII line of Fig. 11
[Fig. 14] Another modified example of the heat storage unit according to the fourth embodiment and a sectional view on XIV-XIV line of Fig. 11
[Fig. 15] Another modified example of the heat storage unit according to the fourth embodiment and an enlarged sectional view of a separation device

### Explanation of Reference Numerals

1 Heat storage unit
1a Heat storage container
2 Oil
2a Oil (to which heat is supplied)
3 Sodium acetate
4 Supply pipe
4a, 4b Discharge hole
5a, 5b Heat exchanger
6 Discharge pipe

## Claims

1. A heat storage unit (1) comprising:
a storage container (1a) that houses a heat storage body (3), which stores heat by a state change from solid to liquid, and a heat exchange medium (2), which exchanges heat by directly contacting said heat storage body (3), has a smaller specific gravity than that of said heat storage body (3), and is separated from said heat storage body (3);
a supply pipe (4) that passes through at least said heat storage body (3) housed in said storage container (1a) and supplies said heat exchange medium (2a) into the storage container (1a); and
a discharge pipe (6) that discharges said heat exchange medium (2) housed in said storage container (1a) to the outside of said storage container (1a), wherein
said supply pipe (4) crosses a boundary surface between said heat exchange medium (2) and said heat storage body (3) housed in said storage container (1a), has a plurality of discharge holes (4b) that discharge said supplied heat exchange medium (2a) into said heat storage body (3), and
at least one one discharge hole (4a) that is positioned inside said heat exchange medium (2) and that discharges said supplied heat exchange medium (2a) into the heat exchange medium (2),
**characterized in that** the heat storage unit (1) further comprises:
wave-absorbing plates (11) that are parallelly arranged with each other along the boundary surface between said heat storage body (3) and said heat exchange medium (2) and arranged vertically with respect to said boundary surface, and prevents agitation on said boundary surface.

2. The heat storage unit according to claim 1, wherein
said supply pipe (4) crosses vertically with respect to said boundary surface.

3. The heat storage unit (1) according to claim 2, wherein
said supply pipe (4) is disposed coaxially around the circumference of an area having said discharge holes (4a, 4b) and has a circulation pipe (4c) to allow said heat exchange medium (2) discharged from said discharge holes(4a, 4b) to go up in the vertical direction.

4. The heat storage unit (1) according to claim 1, wherein
in the case where said supply pipe (4) or at least a part of said supply pipe extends in the horizontal direction,
said discharge holes (4a, 4b) are provided for an area extending in the horizontal direction such that the holes (4b) are open in the vertically downward direction.

5. The heat storage unit (1) according to claim 1, wherein
in said heat storage body (3),
said supply pipe(4) has an expanded portion (13) that is in a shape that widens toward the end and provided with said discharge holes (13a) on the bottom surface.

6. The heat storage unit (1) according to claim 1, wherein
a connection port (41) of said supply pipe (4) is positioned above a connection port (61) of said discharge pipe (6).

7. The heat storage unit (1) according to claim 1, wherein
said discharge pipe (6) includes a separation mechanism (12; 14) that separates said heat storage body (3) and said heat exchange medium (2).

8. The heat storage unit (1) according to claim 7, wherein
said separation mechanism (14) has a separator (14a) for allowing said heat exchange medium (2) and said heat storage body (3), which were taken in, to flow horizontally in one direction and a discharge hole (16b) that discharges said heat storage body (3), which is being precipitated, from said separator (14a), and
said separator (14a) has a shape for guiding said precipitated heat storage body (3) toward said discharge hole(14b).

9. The heat storage unit (1) according to claim 1, wherein
said heat storage body (3) is erythritol.

10. A heat storage unit (1) comprising:
a storage container (1a) that houses a heat storage body (3), which stores heat by a state change from solid to liquid, and a heat exchange medium (2), which exchanges heat by directly contacting said heat storage body (3), has a smaller specific gravity than that of said heat storage body (3), and is separated from said heat storage body (3);
a supply pipe (111) that passes through at least said heat storage body (3) housed in said storage container (1a) and supplies said heat exchange medium (2a) into the storage container (1a); and
a discharge pipe (6) that discharges said heat exchange medium (2) housed in said storage container (1a) to the outside of said storage container (1a), wherein
said supply pipe (111) includes:
a first supply pipe (7) having discharge holes (7a) that discharge said supplied heat exchange medium (2) into said heat storage body (3); and
a second supply pipe (8; 10) that crosses the boundary surface between said heat exchange medium (2) and said heat storage body (3), which are housed in said storage container (1a), and has an outlet (8a; 10b) that discharges said supplied heat exchange medium (2a) into the heat exchange medium (2),
**characterized in that** the heat storage unit (1) further comprises:
wave-absorbing plates (11) that are parallelly arranged with each other along the boundary surface between said heat storage body (3) and said heat exchange medium (2) and arranged vertically with respect to said boundary surface, and prevents agitation on said boundary surface.

11. The heat storage unit (1) according to claim 10, wherein
in said heat storage body (3),
said second supply pipe (10) surrounds at least a part of said first supply pipe (7) including said discharge holes (7a) and has a communicating portion (10c) that guides said discharge holes (7a) to said heat exchange medium (2).

12. The heat storage unit (1) according to claim 10, wherein
a switching valve (9a, 9b) for switching supply and cutoff of said heat exchange medium (2a) depending on the state of said heat storage body (3) is provided severally for said first and second supply pipes (7, 8; 7, 10).

13. The heat storage unit (1) according to claim 10, wherein
in the case where said supply pipe (111) or at least a part of said first supply pipe (7) extends in the horizontal direction,
said discharge holes (7a) are provided for an area extending in the horizontal direction such that the holes (7a) are open in the vertically downward direction.

14. The heat storage unit (1) according to claim 10, wherein
in said heat storage body (3),
said supply pipe (111) or said first supply pipe (7) has an expanded portion (13) that is in a shape that widens toward the end and provided with said discharge holes (13a) on the bottom surface.

15. The heat storage unit (1) according to claim 10, wherein
a connection port (51) of said supply pipe (111) is positioned above a connection port (61) of said discharge pipe (6).

16. The heat storage unit (1) according to claim 10, wherein
said discharge pipe (6) includes a separation mechanism (12; 14) that separates said heat storage body (3) and said heat exchange medium (2).

17. The heat storage unit (1) according to claim 16, wherein
said separation mechanism (14) has a separator (14a) for allowing said heat exchange medium (2) and said heat storage body (3), which were taken in, to flow horizontally in one direction and a discharge hole (14b) that discharges said heat storage body (3), which is being precipitated, from said separator (14a), and
said separator (14a) has a shape for guiding said precipitated heat storage body (3) toward said discharge hole (14b).

18. The heat storage unit (1) according to claim 10, wherein
said heat storage body (3) is erythritol.

19. A heat storage unit (1) comprising:
a storage container (1a) that houses a heat storage body (3), which stores heat by a state change from solid to liquid, and a heat exchange medium (2), which exchanges heat by directly contacting said heat storage body (3), has a smaller specific gravity than that of said heat storage body (3), and is separated from said heat storage body (3);
a supply pipe (111) that passes through at least said heat storage body (3) housed in said storage container (1a) and supplies said heat exchange medium (2a) into said storage container (1a); and
a discharge pipe (6) that discharges said heat exchange medium (2) housed in said storage container (1a) to the outside of said storage container (1a), wherein
said supply pipe (111) is **characterized by** including:
a first supply pipe (15) having an outlet (15a) that discharges said supplied heat exchange medium (2) into said heat exchange medium (2) housed in said storage container (1a); and
a second supply pipe (16) that has at least a part of said first supply pipe (15) inside the pipe (16) and has discharge holes(16a) that discharge said supplied heat exchange medium (2a) into said heat storage body (3),
wherein the heat storage unit (1) further comprises:
wave-absorbing plates (11) that are parallelly arranged with each other along the boundary surface between said heat storage body (3) and said heat exchange medium (2) and arranged vertically with respect to said boundary surface, and prevents agitation on said boundary surface.

20. The heat storage unit (1) according to claim 19, wherein
in the case where said supply pipes (15, 16) are provided parallelly in said heat storage body (3),
a thermal conduction member (17) for conducting heat of said supply pipes (15, 16) is provided.

21. The heat storage unit (1) according to claim 20, wherein
at least a part of said supply pipe (111) is provided on the bottom surface of said storage container (1a).

22. The heat storage unit (1) according to claim 19, wherein
said second supply pipe (16) is provided on the bottom surface of said storage container (1a) so as to cover said bottom surface.

23. The heat storage unit (1) according to claim 19, wherein
a connection port of said supply pipe (111) is positioned above a connection port of said discharge pipe.

24. The heat storage unit (1) according to claim 19, wherein
said discharge pipe (6) includes a separation mechanism (12;14) that separates said heat storage body (3) and said heat exchange medium (2).

25. The heat storage unit (1) according to claim 24, wherein
said separation mechanism (14) has a separator (14a) for allowing said heat exchange medium (2) and said heat storage body (3), which were taken in, to flow horizontally in one direction and a discharge hole (14b) that discharges said heat storage body (3), which is being precipitated, from said separator (14a), and
said separator (14a) has a shape for guiding said precipitated heat storage body (3) toward said discharge hole (14b).

26. The heat storage unit (1) according to claim 19, wherein
said heat storage body (3) is erythritol.

## Patentansprüche

1. Wärmespeichereinheit (1), die Folgendes aufweist:
einen Speicherbehälter (1a), der einen Wärmespeicherkörper (3), der Wärme durch eine Zustandsänderung von fest auf flüssig speichert, und ein Wärmetauschermedium (2) aufnimmt, das Wärme durch direkten Kontakt mit dem Wärmespeicherkörper (3) austauscht, eine kleinere relative Dichte hat als die des Wärmespeicherkörpers (3), und von dem Wärmespeicherkörper (3) getrennt ist;
ein Zufuhrrohr (4), das durch zumindest den Wärmespeicherkörper (3), der in dem Speicherbehälter (1a) aufgenommen ist, hindurchtritt und das Wärmetauschermedium (2a) in den Speicherbehälter (1a) zuführt; und
ein Abgaberohr (6), das das Wärmetauschermedium (2), das in dem Speicherbehälter (1a) aufgenommen ist, zu der Außenseite des Speicherbehälters (1a) abgibt, wobei
das Zufuhrrohr (4), das eine Grenzfläche zwischen dem Wärmetauschermedium (2) und dem Wärmespeicherkörper (3), die in dem Speicherbehälter (1a) aufgenommen sind, schneidet, eine Vielzahl von Abgabelöchern (4b), die das zugeführte Wärmetauschermedium (2a) in den Wärmetauscherkörper (3) abgeben, und zumindest ein Abgabeloch (4a) hat, das innerhalb des Wärmetauschermediums (2) positioniert ist und das das zugeführte Wärmetauschermedium (2a) in das Wärmetauschermedium (2) abgibt,
**dadurch gekennzeichnet, dass** die Wärmespeichereinheit (1) des Weiteren Folgendes ausweist:
Wellenabsorptionsplatten (11), die parallel zueinander entlang der Grenzfläche zwischen dem Wärmespeicherkörper (3) und dem Wärmetauschermedium (2) angeordnet sind und senkrecht in Bezug auf die Grenzfläche angeordnet sind und eine Umwälzung an der Grenzfläche verhindern.

2. Wärmespeichereinheit nach Anspruch 1, wobei
das Zufuhrrohr (4) die Grenzfläche senkrecht schneidet.

3. Wärmespeichereinheit (1) nach Anspruch 2, wobei
das Zufuhrrohr (4) koaxial um den Umfang eines Bereichs mit den Abgabelöchern (4a, 4b) herum angeordnet ist und ein Zirkulationsrohr (4c) hat, das es ermöglicht, dass das Wärmetauschermedium (2), das von den Abgabelöchern (4a, 4b) abgegeben wird, in der senkrechten Richtung nach oben steigt.

4. Wärmespeichereinheit (4) nach Anspruch 1, wobei
in dem Fall, in dem sich das Zufuhrrohr (4) oder zumindest ein Teil des Zufuhrrohrs in der waagerechten Richtung erstreckt, die Abgabelöcher (4a, 4b) für einen Bereich vorgesehen sind, der sich in der waagerechten Richtung derart erstreckt, dass die Löcher (4a, 4b) in der senkrechten Richtung nach unten offen sind.

5. Wärmespeichereinheit (1) nach Anspruch 1, wobei
in dem Wärmespeicherkörper (3),
das Zufuhrrohr (4) einen erweiterten Abschnitt (13) hat, der eine Form hat, die sich zu dem Ende hin aufweitet und mit den Abgabelöchern (13a) an der Bodenfläche vorgesehen ist.

6. Wärmespeichereinheit (1) nach Anspruch 1, wobei
ein Verbindungsanschluss (41) des Zufuhrrohrs (4) oberhalb eines Verbindungsanschlusses (61) des Abgaberohrs (6) positioniert ist.

7. Wärmespeichereinheit (1) nach Anspruch 1, wobei
das Abgaberohr (6) einen Trennmechanismus (12; 14) aufweist, der den Wärmespeicherkörper (3) und das Wärmetauschermedium (2) trennt.

8. Wärmespeichereinheit (1) nach Anspruch 7, wobei
der Trennmechanismus (14) eine Trenneinrichtung (14a), die es ermöglicht, dass das Wärmetauschermedium (2) und der Wärmespeicherkörper (3), die eingebracht worden sind, in einer Richtung in waagrechter Richtung strömen, und ein Abgabeloch (14b) hat, das den Wärmespeicherkörper (3), der abgeschieden worden ist, von der Trenneinrichtung (14a) abgibt, und
die Trenneinrichtung (14a) eine Form zum Führen des abgeschiedenen Wärmespeicherkörpers (3) in Richtung des Abgabelochs (14b) hat.

9. Wärmespeichereinheit (1) nach Anspruch 1, wobei
der Wärmespeicherkörper (3) Erythrit ist.

10. Wärmespeichereinheit (1), die Folgendes aufweist:
einen Speicherbehälter (1a), der einen Wärmespeicherkörper (3) der Wärme durch eine Zustandsänderung von fest auf flüssig speichert, und ein Wärmetauschermedium (2) aufnimmt, das Wärme durch direkten Kontakt mit dem Wärmespeicherkörper (3) austauscht, eine kleinere relative Dichte hat als die des Wärmespeicherkörpers (3), und von dem Wärmespeicherkörper (3) getrennt ist;
ein Zufuhrrohr (111), das durch zumindest den Wärmespeicherkörper (3), der in dem Speicherbehälter (1a) aufgenommen ist, hindurchtritt und das Wärmetauschermedium (2a) in den Speicherbehälter (1a) zuführt; und
ein Abgaberohr (6), das das Wärmetauschermedium (2), das in dem Speicherbehälter (1a) aufgenommen ist, zu der Außenseite des Speicherbehälters (1a) abgibt, wobei
das Zufuhrrohr (111) Folgendes aufweist:
ein erstes Zufuhrrohr (7), das Abgabelöcher (7a) hat, die das zugeführte Wärmetauschermedium (2) in den Wärmespeicherkörper (3) abgeben; und
ein zweites Zufuhrrohr (8; 10), das die Grenzfläche zwischen dem Wärmetauschermedium (2) und dem Wärmespeicherkörper (3) schneidet, die in dem Speicherbehälter (1a) aufgenommen sind, und einen Auslass (8a; 10b) hat, der das zugeführte Wärmetauschermedium (2a) in das Wärmetauschermedium (2) abgibt,
**dadurch gekennzeichnet, dass** die Wärmespeichereinheit (1) des Weiteren Folgendes aufweist:
Wellenabsorptionsplatten (11), die parallel zueinander entlang der Grenzfläche zwischen dem Wärmespeicherkörper (3) und dem Wärmetauschermedium (2) angeordnet sind und senkrecht in Bezug auf die Grenzfläche angeordnet sind und eine Umwälzung an der Grenzfläche verhindern.

11. Wärmespeichereinheit (1) nach Anspruch 10, wobei
in dem Wärmespeicherkörper (3),
das zweite Zufuhrrohr (10) zumindest einen Teil des ersten Zufuhrrohrs (7) mit den Abgabelöchern (7a) umgibt und einen Verbindungsabschnitt (10c) hat, der die Abgabelöcher (7a) zu dem Wärmetauschermedium (2) führt.

12. Wärmetauschereinheit (1) nach Anspruch 10, wobei
ein Umschaltventil (9a, 9b) zum Umschalten einer Zufuhr und einer Unterbrechung des Wärmetauschermediums (2a) abhängig von dem Zustand des Wärmespeicherkörpers (3) einzeln für das erste und das zweite Zufuhrrohr (7, 8; 7, 10) vorgesehen ist.

13. Wärmespeichereinheit (1) nach Anspruch 10, wobei
in dem Fall, in dem sich das Zufuhrrohr (111) oder zumindest ein Teil des ersten Zufuhrrohrs (7) in der waagrechten Richtung erstreckt,
die Abgabelöcher (7a) für einen Bereich, der sich in der waagrechten Richtung erstreckt, derart vorgesehen sind, dass die Löcher (7a) in der senkrechten Richtung nach unten offen sind.

14. Wärmespeichereinheit (1) nach Anspruch 10, wobei
in dem Wärmespeicherkörper (3),
das Zufuhrrohr (111) oder das erste Zufuhrrohr (7) einen erweiterten Abschnitt (13) hat, der eine Form hat, die sich zu dem Ende hin aufweitet und mit den Abgabelöchern (13a) an der Bodenfläche vorgesehen ist.

15. Wärmespeichereinheit (1) nach Anspruch 10, wobei
ein Verbindungsanschluss (51) des Zufuhrrohrs (111) oberhalb eines Verbindungsanschlusses (61) des Abgaberohrs (6) positioniert ist.

16. Wärmespeichereinheit (1) nach Anspruch 10, wobei
das Abgaberohr (6) einen Trennmechanismus (12; 14) aufweist, der den Wärmespeicherkörper (3) und das Wärmetauschermedium (2) trennt.

17. Wärmespeichereinheit (1) nach Anspruch 16, wobei
der Trennmechanismus (14) eine Trenneinrichtung (14a), die es ermöglicht, dass das Wärmetauschermedium (2) und der Wärmespeicherkörper (3), die eingebracht worden sind, in einer Richtung in waagrechter Richtung strömen, und ein Abgabeloch (14b) hat, das den Wärmespeicherkörper (3), der abgeschieden worden ist, von der Trenneinrichtung (14a) abgibt, und
die Trenneinrichtung (14a) eine Form zum Führen des abgeschiedenen Wärmespeicherkörpers (3) in Richtung des Abgabelochs (14b) hat.

18. Wärmespeichereinheit (1) nach Anspruch 10, wobei
der Wärmespeicherkörper (3) Erythrit ist.

19. Wärmespeichereinheit (1), die Folgendes aufweist:
einen Speicherbehälter (1a), der einen Wärmespeicherkörper (3) der Wärme durch eine Zustandsänderung von fest auf flüssig speichert, und ein Wärmetauschermedium (2) aufnimmt, das Wärme durch direkten Kontakt mit dem Wärmespeicherkörper (3) austauscht, eine kleinere relative Dichte hat als die des Wärmespeicherkörpers (3), und von dem Wärmespeicherkörper (3) getrennt ist;
ein Zufuhrrohr (111), das durch zumindest den Wärmespeicherkörper (3), der in dem Speicherbehälter (1a) aufgenommen ist, hindurchtritt und das Wärmetauschermedium (2a) in den Speicherbehälter (1a) zuführt; und
ein Abgaberohr (6), das das Wärmetauschermedium (2), das in dem Speicherbehälter (1a) aufgenommen ist, zu der Außenseite des Speicherbehälters (1a) abgibt, wobei
das Zufuhrrohr (111) **dadurch gekennzeichnet ist, dass** es Folgendes aufweist:
ein erstes Zufuhrrohr (15) mit einem Auslass (15a), der das zugeführte Wärmetauschermedium (2) in das Wärmetauschermedium (2), das in dem Speicherbehälter (1) aufgenommen ist, abgibt; und
ein zweites Zufuhrrohr (16), das zumindest einen Teil des ersten Zufuhrrohrs (15) innerhalb des Rohrs (16) hat und Abgabelöcher (16a) hat, die das zugeführte Wärmetauschermedium (2a) in den Wärmespeicherkörper (3) abgeben,
wobei die Wärmespeichereinheit (1) des Weiteren Folgendes aufweist:
Wellenabsorptionsplatten (11), die parallel zueinander entlang der Grenzfläche zwischen dem Wärmespeicherkörper (3) und dem Wärmetauschermedium (2) angeordnet sind und senkrecht in Bezug auf die Grenzfläche angeordnet sind und eine Umwälzung an der Grenzfläche verhindern.

20. Wärmetauschereinheit (1) nach Anspruch 19, wobei
in dem Fall, in dem die Zufuhrrohre (15, 16) parallel in dem Wärmetauscherkörper (3) vorgesehen sind,
ein Wärmeleitungsbauteil (17) zum Leiten von Wärme der Zufuhrrohre (15, 16) vorgesehen ist.

21. Wärmespeichereinheit (1) nach Anspruch 20, wobei
zumindest ein Teil des Zufuhrrohrs (111) an der Bodenfläche des Speicherbehälters (1a) vorgesehen ist.

22. Wärmespeichereinheit (1) nach Anspruch 19, wobei
das zweite Zufuhrrohr (16) an der Bodenfläche des Speicherbehälters (1a) vorgesehen ist, um die Bodenfläche abzudecken.

23. Wärmespeichereinheit (1) nach Anspruch 19, wobei
ein Verbindungsanschluss des Zufuhrrohrs (111) oberhalb eines Verbindungsanschlusses des Abgaberohrs positioniert ist.

24. Wärmespeichereinheit (1) nach Anspruch 19, wobei
das Abgaberohr (6) einen Trennmechanismus (12; 14) aufweist, der den Wärmespeicherkörper (3) und das Wärmetauschermedium (2) trennt.

25. Wärmespeichereinheit (1) nach Anspruch 24, wobei
der Trennmechanismus (14) eine Trenneinrichtung (14a), die es ermöglicht, dass das Wärmetauschermedium (2) und der Wärmespeicherkörper (3), die eingebracht worden sind, in einer Richtung in waagrechter Richtung strömen, und ein Abgabeloch (14b) hat, das den Wärmespeicherkörper (3), der abgeschieden worden ist, von der Trenneinrichtung (14a) abgibt, und
die Trenneinrichtung (14a) eine Form zum Führen des abgeschiedenen Wärmespeicherkörpers (3) in Richtung des Abgabelochs (14b) hat.

26. Wärmespeichereinheit (1) nach Anspruch 19, wobei der Wärmespeicherkörper (3) Erythrit ist.

## Revendications

1. Unité de stockage de chaleur (1) comprenant :
un récipient de stockage (1a) qui loge un corps de stockage de chaleur (3), qui stocke de la chaleur par un changement d'état de solide à liquide, et un milieu d'échange de chaleur (2), qui échange de la chaleur par contact direct avec ledit corps de stockage de chaleur (3), a une densité spécifique inférieure à celle dudit corps de stockage de chaleur (3), et est séparé dudit corps de stockage de chaleur (3) ;
un tuyau d'alimentation (4) qui passe à travers au moins ledit corps de stockage de chaleur (3) logé dans ledit récipient de stockage (1a) et alimente ledit milieu d'échange de chaleur (2a) dans le récipient de stockage (1a) ; et
un tuyau d'évacuation (6) qui évacue ledit milieu d'échange de chaleur (2) logé dans ledit récipient de stockage (1a) à l'extérieur dudit récipient de stockage (1a), où
ledit tuyau d'alimentation (4) traverse une surface limite entre ledit milieu d'échange de chaleur (2) et ledit corps de stockage de chaleur (3) logés dans ledit récipient de stockage (1a), a une pluralité de trous d'évacuation (4b) qui évacuent ledit milieu d'échange de chaleur alimenté (2a) dans ledit corps de stockage de chaleur (3), et
au moins un trou d'évacuation (4a) qui est positionné à l'intérieur dudit milieu d'échange de chaleur (2) et qui évacue ledit milieu d'échange de chaleur alimenté (2a) dans le milieu d'échange de chaleur (2),
**caractérisée en ce que** l'unité de stockage de chaleur (1) comprend en outre :
des plaques d'absorption d'ondes (11) qui sont agencées parallèlement les unes aux autres le long de la surface limite entre ledit corps de stockage de chaleur (3) et ledit milieu d'échange de chaleur (2) et agencées verticalement par rapport à ladite surface limite, et empêchent l'agitation sur ladite surface limite.

2. Unité de stockage de chaleur selon la revendication 1, dans laquelle
ledit tuyau d'alimentation (4) traverse verticalement par rapport à ladite surface limite.

3. Unité de stockage de chaleur (1) selon la revendication 2, dans laquelle
ledit tuyau d'alimentation (4) est disposé de manière coaxiale autour de la circonférence d'une zone ayant lesdits trous d'évacuation (4a, 4b) et a un tuyau de circulation (4c) pour permettre audit milieu d'échange de chaleur (2) évacué à partir desdits trous d'évacuation (4a, 4b) de monter dans la direction verticale.

4. Unité de stockage de chaleur (1) selon la revendication 1, dans laquelle
dans le cas où ledit tuyau d'alimentation (4) ou au moins une partie dudit tuyau d'alimentation s'étend dans la direction horizontale, lesdits trous d'évacuation (4a, 4b) sont prévus pour une zone s'étendant dans la direction horizontale de sorte que les trous (4b) soient ouverts dans la direction verticale vers le bas.

5. Unité de stockage de chaleur (1) selon la revendication 1, dans laquelle
dans ledit corps de stockage de chaleur (3),
ledit tuyau d'alimentation (4) a une partie étendue (13) qui se présente sous une forme qui s'élargit vers l'extrémité et est pourvue desdits trous d'évacuation (13a) sur la surface inférieure.

6. Unité de stockage de chaleur (1) selon la revendication 1, dans laquelle
une ouverture de raccordement (41) dudit tuyau d'alimentation (4) est positionnée au-dessus d'une ouverture de raccordement (61) dudit tuyau d'évacuation (6).

7. Unité de stockage de chaleur (1) selon la revendication 1, dans laquelle
ledit tuyau d'évacuation (6) comporte un mécanisme de séparation (12 ; 14) qui sépare ledit corps de stockage de chaleur (3) et ledit milieu d'échange de chaleur (2).

8. Unité de stockage de chaleur (1) selon la revendication 7, dans laquelle
ledit mécanisme de séparation (14) a un séparateur (14a) pour permettre audit milieu d'échange de chaleur (2) et audit corps de stockage de chaleur (3), qui ont été prélevés, de s'écouler horizontalement dans une direction et un trou d'évacuation (16b) qui évacue ledit corps de stockage de chaleur (3), qui est en cours de précipitation, à partir dudit séparateur (14a), et
ledit séparateur (14a) a une forme pour guider ledit corps de stockage de chaleur précipité (3) vers ledit trou d'évacuation (14b).

9. Unité de stockage de chaleur (1) selon la revendication 1, dans laquelle
ledit corps de stockage de chaleur (3) est l'érythritol.

10. Unité de stockage de chaleur (1) comprenant :
un récipient de stockage (1a) qui loge un corps de stockage de chaleur (3), qui stocke de la chaleur par un changement d'état de solide à liquide, et un milieu d'échange de chaleur (2), qui échange de la chaleur par contact direct avec ledit corps de stockage de chaleur (3), a une densité spécifique inférieure à celle dudit corps de stockage de chaleur (3), et est séparé dudit corps de stockage de chaleur (3) ;
un tuyau d'alimentation (111) qui passe à travers au moins ledit corps de stockage de chaleur (3) logé dans ledit récipient de stockage (1a) et alimente ledit milieu d'échange de chaleur (2a) dans le récipient de stockage (1a) ; et
un tuyau d'évacuation (6) qui évacue ledit milieu d'échange de chaleur (2) logé dans ledit récipient de stockage (1a) à l'extérieur dudit récipient de stockage (1a), où
ledit tuyau d'alimentation (111) comporte :
un premier tuyau d'alimentation (7) ayant des trous d'évacuation (7a) qui évacuent ledit milieu d'échange de chaleur alimenté (2) dans ledit corps de stockage de chaleur (3) ; et
un deuxième tuyau d'alimentation (8 ; 10) qui traverse la surface limite entre ledit milieu d'échange de chaleur (2) et ledit corps de stockage de chaleur (3), qui sont logés dans ledit récipient de stockage (1a), et a une sortie (8a ; 10b) qui évacue ledit milieu d'échange de chaleur alimenté (2a) dans le milieu d'échange de chaleur (2),
**caractérisé en ce que** l'unité de stockage de chaleur (1) comprend en outre :
des plaques d'absorption d'ondes (11) qui sont agencées parallèlement les unes aux autres le long de la surface limite entre ledit corps de stockage de chaleur (3) et ledit milieu d'échange de chaleur (2) et agencées verticalement par rapport à ladite surface limite, et empêchent l'agitation sur ladite surface limite.

11. Unité de stockage de chaleur (1) selon la revendication 10, dans laquelle
dans ledit corps de stockage de chaleur (3),
ledit deuxième tuyau d'alimentation (10) entoure au moins une partie dudit premier tuyau d'alimentation (7) comportant lesdits trous d'évacuation (7a) et a une partie de communication (10c) qui guide lesdits trous d'évacuation (7a) audit milieu d'échange de chaleur (2).

12. Unité de stockage de chaleur (1) selon la revendication 10, dans laquelle
une soupape de commutation (9a, 9b) pour commuter l'alimentation et la coupure dudit milieu d'échange de chaleur (2a) en fonction de l'état dudit corps de stockage de chaleur (3) est prévue séparément pour lesdits premier et deuxième tuyau d'alimentation (7, 8 ; 7, 10).

13. Unité de stockage de chaleur (1) selon la revendication 10, dans laquelle
dans le cas où ledit tuyau d'alimentation (111) ou au moins une partie dudit premier tuyau d'alimentation (7) s'étend dans la direction horizontale,
lesdits trous d'évacuation (7a) sont prévus pour une zone s'étendant dans la direction horizontale de sorte que les trous (7a) soient ouverts dans la direction verticale vers le bas.

14. Unité de stockage de chaleur (1) selon la revendication 10, dans laquelle,
dans ledit corps de stockage de chaleur (3),
ledit tuyau d'alimentation (111) ou ledit premier tuyau d'alimentation (7) a une partie étendue (13) qui se présente sous une forme qui s'élargit vers l'extrémité et est pourvue desdits trous d'évacuation (13a) sur la surface inférieure.

15. Unité de stockage de chaleur (1) selon la revendication 10, dans laquelle
une ouverture de raccordement (51) dudit tuyau d'alimentation (111) est positionnée au-dessus d'une ouverture de raccordement (61) dudit tuyau d'évacuation (6).

16. Unité de stockage de chaleur (1) selon la revendication 10, dans laquelle
ledit tuyau d'évacuation (6) comporte un mécanisme de séparation (12 ; 14) qui sépare ledit corps de stockage de chaleur (3) et ledit milieu d'échange de chaleur (2).

17. Unité de stockage de chaleur (1) selon la revendication 16, dans laquelle
ledit mécanisme de séparation (14) a un séparateur (14a) pour permettre audit milieu d'échange de chaleur (2) et audit corps de stockage de chaleur (3), qui ont été prélevés, de s'écouler horizontalement dans une direction et un trou d'évacuation (14b) qui évacue ledit corps de stockage de chaleur (3), qui est en cours de précipitation, à partir dudit séparateur (14a), et
ledit séparateur (14a) a une forme pour guider ledit corps de stockage de chaleur précipité (3) vers ledit trou d'évacuation (14b).

18. Unité de stockage de chaleur (1) selon la revendication 10, dans laquelle
ledit corps de stockage de chaleur (3) est l'érythritol.

19. Unité de stockage de chaleur (1) comprenant :
un récipient de stockage (1a) qui loge un corps de stockage de chaleur (3), qui stocke de la chaleur par un changement d'état de solide à liquide, et un milieu d'échange de chaleur (2), qui échange de la chaleur par contact direct avec ledit corps de stockage de chaleur (3), a une densité spécifique inférieure à celle dudit corps de stockage de chaleur (3), et est séparé dudit corps de stockage de chaleur (3) ;
un tuyau d'alimentation (111) qui passe à travers au moins ledit corps de stockage de chaleur (3) logé dans ledit récipient de stockage (1a) et alimente ledit milieu d'échange de chaleur (2a) dans ledit récipient de stockage (1a) ; et
un tuyau d'évacuation (6) qui évacue ledit milieu d'échange de chaleur (2) logé dans ledit récipient de stockage (1a) à l'extérieur dudit récipient de stockage (1a), où
ledit tuyau d'alimentation (111) est **caractérisé en ce qu'**il comporte :
un premier tuyau d'alimentation (15) ayant une sortie (15a) qui évacue ledit milieu d'échange de chaleur alimenté (2) dans ledit milieu d'échange de chaleur (2) logé dans ledit récipient de stockage (1a); et
un deuxième tuyau d'alimentation (16) qui a au moins une partie dudit premier tuyau d'alimentation (15) à l'intérieur du tuyau (16) et a des trous d'évacuation (16a) qui évacuent ledit milieu d'échange de chaleur alimenté (2a) dans ledit corps de stockage de chaleur (3),
où l'unité de stockage de chaleur (1) comprend en outre :
des plaques d'absorption d'ondes (11) qui sont agencées parallèlement les unes aux autres le long de la surface limite entre ledit corps de stockage de chaleur (3) et ledit milieu d'échange de chaleur (2) et agencées verticalement par rapport à ladite surface limite, et empêchent l'agitation sur ladite surface limite.

20. Unité de stockage de chaleur (1) selon la revendication 19, dans laquelle
dans le cas où lesdits tuyaux d'alimentation (15, 16) sont prévus parallèlement dans ledit corps de stockage de chaleur (3),
un élément de conduction thermique (17) pour conduire la chaleur desdits tuyaux d'alimentation (15, 16) est prévu.

21. Unité de stockage de chaleur (1) selon la revendication 20, dans laquelle
au moins une partie dudit tuyau d'alimentation (111) est prévue sur la surface inférieure dudit récipient de stockage (1a).

22. Unité de stockage de chaleur (1) selon la revendication 19, dans laquelle
ledit deuxième tuyau d'alimentation (16) est prévu sur la surface inférieure dudit récipient de stockage (1a) de manière à couvrir ladite surface inférieure.

23. Unité de stockage de chaleur (1) selon la revendication 19, dans laquelle
une ouverture de raccordement dudit tuyau d'alimentation (111) est positionnée au-dessus d'une ouverture de raccordement dudit tuyau d'évacuation.

24. Unité de stockage de chaleur (1) selon la revendication 19, dans laquelle
ledit tuyau d'évacuation (6) comporte un mécanisme de séparation (12 ; 14) qui sépare ledit corps de stockage de chaleur (3) et ledit milieu d'échange de chaleur (2).

25. Unité de stockage de chaleur (1) selon la revendication 24, dans laquelle
ledit mécanisme de séparation (14) a un séparateur (14a) pour permettre audit milieu d'échange de chaleur (2) et audit corps de stockage de chaleur (3), qui ont été prélevés, de s'écouler horizontalement dans une direction et un trou d'évacuation (14b) qui évacue ledit corps de stockage de chaleur (3), qui est en cours de précipitation, à partir dudit séparateur (14a), et
ledit séparateur (14a) a une forme pour guider ledit corps de stockage de chaleur précipité (3) vers ledit trou d'évacuation (14b).

26. Unité de stockage de chaleur (1) selon la revendication 19, dans laquelle
ledit corps de stockage de chaleur (3) est l'érythritol.
